# FASCICULE DE BREVET EUROPEEN

(11) **EP 0 495 719 B1**
(45) Date de publication et mention de la délivrance du brevet: **03.07.1996**
(21) Numéro de dépôt: 92400113.4
(22) Date de dépôt: 16.01.1992
(51) Int. Cl.: B60N 3/14, F23Q 7/00

(54) **Allume-cigares, notamment pour véhicules automobiles**
Zigarettenanzünder, vorzugweise für Kraftfahrzeuge
Cigarette lighter, especially for motor vehicles

(30) Priorité: 17.01.1991 FR 9100501; 23.04.1991 FR 9104973
(43) Date de publication de la demande: 22.07.1992
(73) Titulaire: VALEO VISION, 93012 Bobigny Cédex (FR)
(72) Inventeur: Mallet, Christian, F-91490 Milly-la-forêt (FR); Lagier, Daniel, F-92000 Nanterre (FR); Wurtzbacher, Michel, F-75017 Paris (FR)
(74) Mandataire: Gamonal, Didier

(56) Documents cités:
- DE-C- 3 932 602
- FR-A- 2 272 343
- GB-A- 2 099 122
- PATENT ABSTRACTS OF JAPAN vol. 8, no. 57 (M-283)(1494) 15 Mars 1984 & JP-A-58 208 515 (TOUKAI RIKA DENKI) 5 Décembre 1983

## Description

La présente invention concerne un allume-cigares, notamment pour véhicules automobiles, du genre comportant, d'une part, un bouchon amovible, formant une fiche de courant, pourvu d'une coupelle d'extrémité recevant un corps électrique de chauffage, et d'autre part, un corps creux d'allumage, formant prise de courant, pourvu intérieurement d'un élément d'accrochage et extérieurement de parties d'alimentation électriques, ledit bouchon se logeant à coulissement à l'intérieur du corps d'allumage avec coopération de ladite coupelle avec ledit élément d'accrochage pour maintien du corps électrique de chauffage en position de chauffage et établissement d'un circuit électrique d'alimentation pour ledit corps de chauffage.

Usuellement l'élément d'accrochage est fixé au fond du corps d'allumage par l'intermédiaire d'un organe de fixation dont la tête s'appuie sur l'élément d'accrochage et qui traverse une pièce électriquement isolante interposée entre ledit fond et l'élément d'accrochage.

Un tel allume-cigares est décrit, par exemple, dans le document DE-A-23 51 971. Dans ce document, l'élément d'accrochage est un bilame et il est prévu un dispositif de protection contre les surchauffes, sous forme de languettes supplémentaires solidaires du bilame, qui en cas de surchauffe sont admises à venir en contact avec le corps d'allumage.

Un tel dispositif complique la fabrication du bilame et demande un réglage précis pour l'intervention des languettes supplémentaires. En outre, cela entraîne une destruction d'un fusible qui usuellement protège d'autres accessoires du véhicule. De plus, les languettes supplémentaires sont accessibles et peuvent être déréglées. Enfin, les temps de réponse pour établir les courts-circuits ne sont pas aussi courts que désirés par exemple par temps froid.

Pour pallier ces inconvénients, on peut songer à utiliser un dispositif de protection contre les surchauffes inséré dans ledit circuit d'alimentation de l'allume-cigares sous forme d'un disjoncteur thermique réarmable ayant un coefficient de température positif permanent, avec une résistance augmentant avec la température comme décrit dans le document DE-C-39 32 602 conforme au préambule de la revendication 1.

Un tel disjoncteur est divulgué par exemple dans les documents US-A-4,352,083 et US-A-4,317,027. Il peut être donc à base de polymère semi-conducteur ou en variante en matériau céramique à base de titanate de baryum.

Ainsi, en cas de surchauffe, par exemple lorsque la coupelle reste coincée dans le bilame, le disjoncteur thermique passe très rapidement d'une très basse résistance à une résistance élevée lorsque consécutivement à une surintensité ou à une surchauffe sa température dépasse un certain seuil. Lorsque la surintensité ou la température sont substantiellement réduites ou éliminées, le composant se refroidit et retrouve sa faible résistance. L'allume-cigares redevient donc opérationnel sans qu'il soit nécessaire de remplacer un quelconque composant, notamment le fusible de protection associé à l'allume-cigares. En outre, aucun arc ne se produit, et ce composant a un bon temps de réponse. De plus, l'encombrement tant radial qu'axial de l'allume-cigares n'est pas affecté outre mesure.

Un problème de montage se pose alors afin que le disjoncteur ne perturbe pas le fonctionnement de l'allume-cigares par exemple en créant des courts-circuits.

En outre, il est souhaitable de modifier le moins possible l'allume-cigares. De plus il est souhaitable que le disjoncteur réagisse rapidement en cas de surchauffe.

La présente invention a pour objet de répondre à ces souhaits et donc de créer, de manière simple et économique, un allume-cigares à disjoncteur thermique réarmable ayant un coefficient de température positif, tout en ayant un fonctionnement irréprochable dudit allume-cigares et un temps de réponse amélioré.

Suivant l'invention, un allume-cigares du type sus-indiqué, comportant un disjoncteur thermique réarmable à coefficient de température positif est caractérisé en ce qu'il est implanté entre la tête de l'organe de fixation et l'élément d'accrochage et en ce qu'il est percé pour le passage d'un centreur isolant appartenant à la pièce électriquement isolante portée intérieurement par le corps d'allumage, ledit centreur étant traversé intérieurement par l'organe de fixation appartenant au circuit électrique d'alimentation du corps de chauffage de l'allume-cigares.

Grâce à l'invention, on est sûr que le disjoncteur thermique réarmable ne viendra jamais en contact avec ladite pièce électrique, en sorte qu'aucun court-circuit n'est à craindre. En outre, le centreur facilite le montage du disjoncteur.

On appréciera que le centreur isolant limite les phénomènes de fluage et de cassure du disjoncteur, notamment lorsque celui-ci est respectivement à base de polymère semi-conducteur ou en matériau céramique. En outre, cette disposition améliore le maintien du disjoncteur thermique, celui-ci étant empêché de se déplacer après montage.

On appréciera qu'un maximum de pièces d'un allume-cigares classique est conservé. En effet, le centreur isolant peut être obtenu aisément par moulage à la faveur des pièces d'isolation électrique en matière plastique, que comporte usuellement l'allume-cigares. Ce centreur favorise l'implantation du disjoncteur au niveau du bilame.

Grâce à cette implantation le disjoncteur thermique est plus près du corps de chauffage, en sorte que son temps de réponse est amélioré.

Le centreur est favorable au remplacement du bilame d'accrochage par un élément métallique d'accrochage n'ayant plus la fonction de bilame.

La description qui va suivre illustre l'invention en référence aux dessins annexés dans lesquels :
- la figure 1 est une vue éclatée en coupe axiale d'un bouchon amovible d'un allume-cigares selon l'invention ;
- la figure 2 est une vue en coupe du disjoncteur thermique réarmable à polymère semi-conducteur selon l'invention ;
- la figure 3 est une courbe caractéristique de la résistance en fonction de la température du disjoncteur thermique selon l'invention ;
- la figure 4 est une vue en coupe axiale partielle du corps d'allumage pour un premier exemple de réalisation selon l'invention ;
- la figure 5 est une vue partielle en coupe axiale montrant l'implantation d'un deuxième disjoncteur thermique ;
- la figure 6 est une vue en coupe axiale d'un allume-cigares monté dans la paroi du véhicule pour un deuxième exemple de réalisation selon l'invention ;
- la figure 7 est une vue de dessus du bouchon de l'allume-cigares ;
- la figure 8 est une vue schématique du circuit électrique de l'allume-cigares ;
- la figure 9 est une vue analogue à la figure 4 pour un troisième exemple de réalisation ;
- la figure 10 est une vue de dessous selon la figure 9.

Dans les figures représentées, l'allume-cigares pour véhicules automobiles comporte, d'une part, un bouchon amovible 1, formant une fiche de courant, pourvu d'une coupelle d'extrémité 11 recevant un corps électrique de chauffage 10 destiné à allumer une cigarette ou un cigare, et d'autre part, un corps d'allumage 2 creux, formant prise de courant, pourvu intérieurement d'un élément d'accrochage 3 et extérieurement de deux parties 4,5 d'alimentation électriques. Le bouchon 1 se loge à coulissement à l'intérieur du corps d'allumage 2 et est propre à occuper une position de chauffage (allume-cigares branché), une position de repos (allume-cigares débranché) et à être extrait.

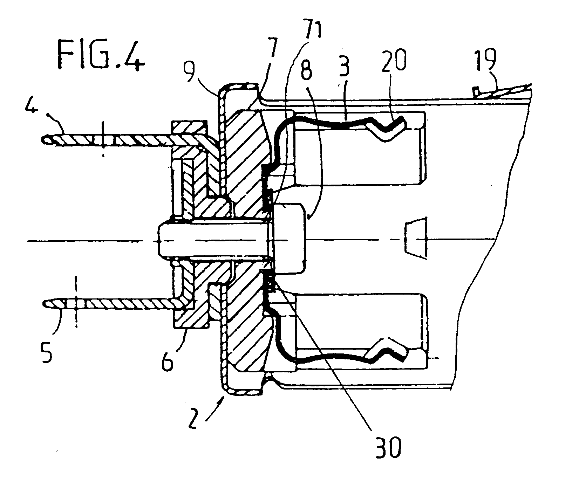

A la figure 4, l'élément d'accrochage 3 consiste en un bilame et les parties 4,5 en des languettes électriquement conductrices.

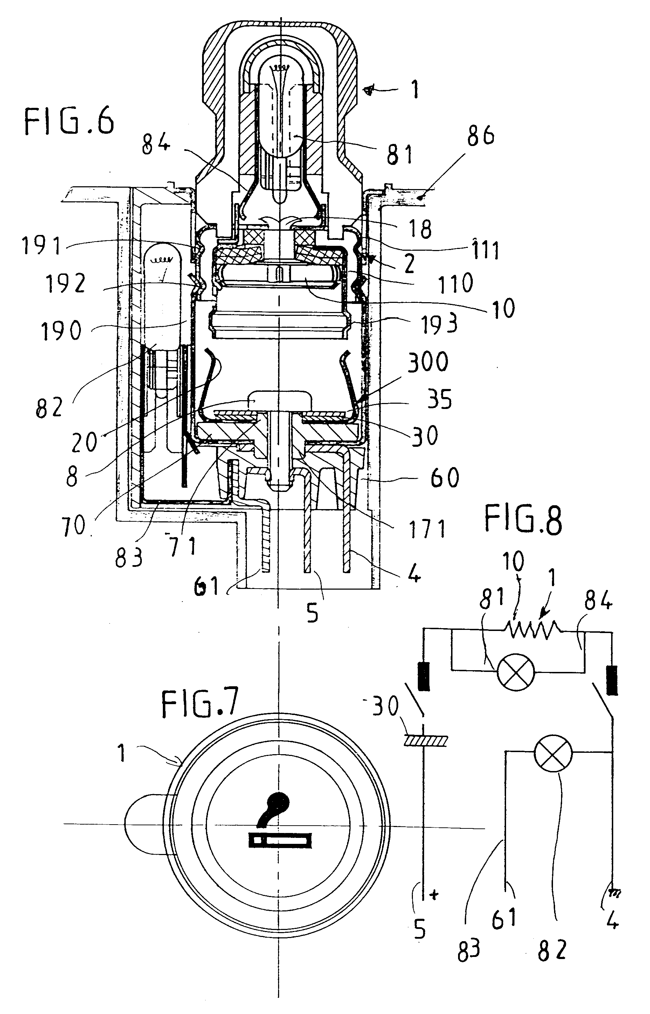

Pour ce faire le bouchon 1 présente un bouton 13 mobile et un pare-cendres 14 à extrémité crantée et le corps 2 des languettes élastiques de retenue 19 visibles à la figure 5 et partiellement à la figure 4. Dans les positions de repos et de chauffage, le bouchon 1 est enfoncé dans le corps 2 de forme complémentaire et les languettes 19, dotées chacune à leur extrémité d'un crochet de retenue, retiennent le pare-cendres 14 par coopération élastique avec le cran de celui-ci. En position de repos la coupelle 11 est au-dessus du bilame 3, tandis qu'en position de chauffage le bouton 13 est enfoncé et la coupelle 11 coopère avec des lames du bilame 3 formant organe de retenue et prise de courant.

Un circuit électrique étant alors établi entre les deux languettes d'alimentation 4,5 à travers le bilame 3 et le corps de chauffage 10, les lames du bilame s'incurvant vers l'extérieur au fur et à mesure que le bilame s'échauffe, jusqu'à désenclenchement de la coupelle 11 sous l'action d'un ressort de rappel 16 porté par le bouchon 1. Il ne reste plus alors qu'à l'usager de retirer le bouchon pour allumer sa cigarette ou son cigare.

Le corps d'allumage 2 est de forme cylindrique, ici en forme de douille, et présente un fond 9, une jupe dans laquelle sont pratiquées par découpe les languettes 19 ainsi que des ouvertures de dégagement pour les lames du bilame 3, et enfin une extrémité libre pour introduction du bouchon 1. Le corps 2 est en matériau électriquement conducteur en étant ici métallique et est propre à être fixé soit directement soit indirectement par l'intermédiaire d'une bague d'éclairage à une paroi du véhicule, usuellement en matière plastique.

C'est le fond 9 qui porte à isolation électrique, par l'intermédiaire d'une première pièce électriquement isolante 6 et d'une seconde pièce électriquement isolante 7, le bilame 3. Ce fond porte également les languettes d'alimentation électriques 4,5 s'étendant globalement axialement à l'extérieur du corps d'allumage 2 en étant ici globalement en forme de L avec chacune une base parallèle audit fond 9 et une partie d'orientation axiale.

Les pièces isolantes 6,7, ici en matière plastique, sont montées de part et d'autre du fond 9, la pièce 6, dite pièce isolante externe, étant montée à l'extérieur du corps 2 et la pièce 7, dite pièce isolante interne, à l'intérieur du corps 2.

Le bilame 3 est monté à l'intérieur du corps 2 sur la pièce isolante 7 creuse du type de celle décrite dans le document FR-A-2 349 796.

Ici le bilame 3 est en forme de U avec deux lames pourvues chacune d'un bec d'accrochage 20 pour maintien de la coupelle 11 et la pièce 7, en matériau également thermiquement isolant, présente une chemise pourvue d'ouvertures latérales pour le passage des lames du bilame 3 et a une extrémité biseautée s'étendant au-delà du bilame 3 pour guidage de la coupelle 11. Le fond de cette pièce 7 est creusé pour logement de la base du bilame et immobilisation de celui-ci par coopération de formes.

Un organe de fixation 8, ici une vis ou en variante un rivet, s'appuie par sa tête sur la base du bilame 3 via un disjoncteur thermique 30 réarmable décrit ci-après. Cet organe 8 traverse la pièce 7, le fond 9, la pièce 6, qui sont tous troués à cet effet, et est fixé ici par vissage à la base de la languette 5 dotée d'un trou fileté à cet effet. La pièce isolante 6 est dotée d'une creusure pour immobilisation par coopération de formes de la base de la languette 5. Cette pièce 6 présente un téton central traversé intérieurement par la vis 8 et servant extérieurement de centreur à la base de la languette 4 interposée axialement entre le fond 9 et la pièce 6, qui présente latéralement une ouverture pour le passage de la languette 4.

Ainsi l'organe 8 sert à la fixation des pièces 3,7,4,6 et 5 au fond 9 de part et d'autre de celui-ci, avec blocage en rotation desdites pièces par coopération ou liaison de formes.

Les languettes 19 s'étendent au-dessus du bilame 3 à la faveur du dégagement pour les lames du bilame 3, tandis que les languettes 4,5 électriquement conductrices sont reliées respectivement à la borne négative de la source de tension (ici la batterie) du véhicule (la masse de celui-ci) et à la borne positive de ladite source de tension (la batterie).

Le bouchon 1 comporte une partie de préhension 12 en matière isolante, ici en matière plastique entourant le bouton 13 également en matière isolante. Ce bouton 13 est attelé à la coupelle 11 par l'intermédiaire d'une douille 17 électriquement conductrice, ici métallique, avec intervention d'une pièce intermédiaire isolante en matière plastique 29 pour formation d'un équipage mobile.

Ce bouton 13 est monté par clipsage sur la pièce 29, tandis que la douille 17 est assemblée par sertissage à la pièce 29 qui présente à cet effet un nez de centrage. La douille 17 est guidée par un guide 15 fixe en matériau électriquement conducteur entouré par le pare-cendres 14 en étant solidaire de la partie de préhension 12, tout comme le pare-cendres 14, ici par surmoulage.

La pièce 15 sert d'appui au ressort de rappel 16, ici un ressort à boudin, s'étendant axialement entre les pièces 29 et 15. La douille 17 présente un fond percé pour fixation de la coupelle 11 comme décrit dans le document FR-A-2 457 787, avec intervention d'un organe de fixation 18 formant axe.

Autour de l'organe 18 et entre la coupelle 11 et la douille 17, sont disposées des rondelles électriquement isolantes. Dans le fond de la coupelle 11 est disposée une rondelle électriquement isolante, dont le bord intérieur vient prendre appui sur un épaulement annulaire à parois inclinées prévues sur l'organe 18. Le corps de chauffage 10 consiste ici en une résistance électrique avec un fil enroulé en spirale. L'extrémité intérieure de la spirale est logée dans une fente diamétrale prévue à l'extrémité de l'organe 18 afin d'assurer sa fixation et sa liaison électrique avec la douille 17 par l'intermédiaire de la pièce 18.

Au-dessus de la spirale est placé un anneau métallique dont le diamètre intérieur est tel qu'il correspond au diamètre intérieur de la coupelle 11 et dont la largeur est telle que cet anneau est susceptible de s'appliquer au moins sur la spire extérieure du corps 10. On notera que le pare-cendres 14 en matériau électriquement conducteur, ici métallique, entoure la coupelle 11 dont le bord est rabattu intérieurement pour coopérer avec les becs d'accrochage 20. Bien entendu le corps chauffant 10 peut être un corps en céramique conductrice.

Ainsi, lorsque le bouton 13 est enfoncé la coupelle 11 vient en prise avec le bilame 3, et un circuit électrique s'établit de la languette 5 à la languette 4 à travers la vis 8, le bilame 3, la coupelle 11, le corps électrique de chauffage 10, l'organe 18, la douille 17, le guide 15, le pare-cendres 14 et le corps 2, toutes ces pièces étant en matériau électriquement conducteur.

Dans cette configuration de chauffage, le corps 10 s'échauffe et les lames du bilame 3 s'écartent progressivement en sorte que le ressort de rappel 16 désenclenche la coupelle 10, en ramenant le bouton 13 à sa configuration initiale de retenue.

Dans certains cas, le désenclenchement ne se produit pas, par exemple lorsque la coupelle 11 est mal positionnée, et pour éviter une surchauffe de l'allumecigares il est prévu un dispositif de protection contre les surchauffes inséré dans le circuit électrique d'alimentation de l'allume-cigares et donc du corps de chauffage 10.

Ce dispositif consiste ici en un disjoncteur thermique réarmable 30, ici à base de polymère semi-conducteur, ayant un coefficient de température positif permanent avec une résistance augmentant avec la température.

En variante ce disjoncteur à coefficient de température positif peut être en matériau céramique à base de titanate de baryum.

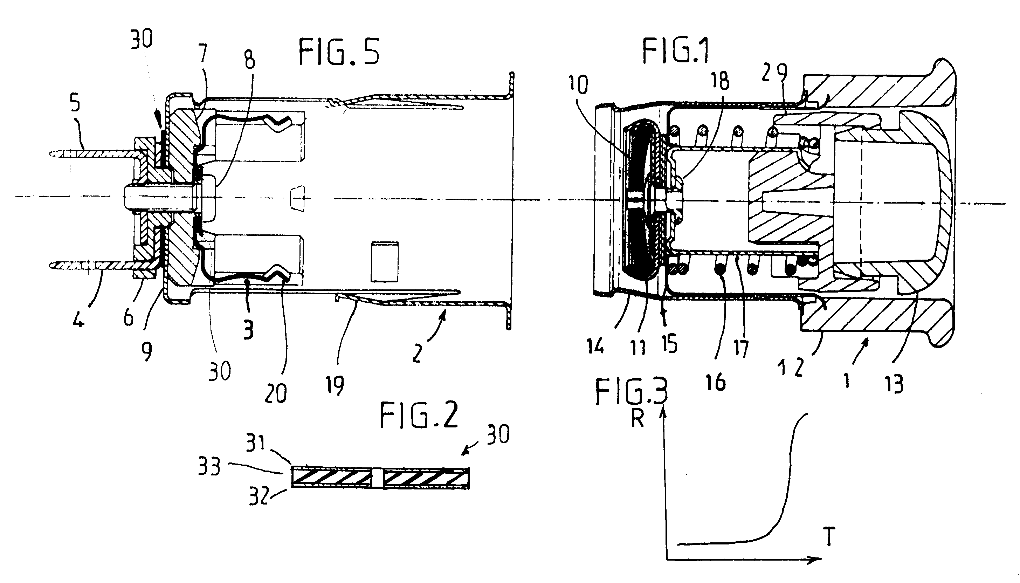

Ce disjoncteur 30 est en forme de plaque et est centré, suivant l'invention, par un centreur issu de la pièce isolante 7 de manière décrite ci-après. Ce disjoncteur 30 comporte deux électrodes ici métalliques 31,32 (figure 2), respectivement en contact avec selon une première forme de réalisation (figure 4) avec la base du bilame 3 et la tête de l'organe de fixation 8, disposées de part et d'autre d'une matrice 33 en polymère semi-conducteur. Cette matrice contient des particules conductrices, ici à base de carbone, telles que du carbone noir ou du graphite.

Pour formation du disjoncteur 30, on peut utiliser un composant vendu sous le marque "PolySwitch". On pourra également se référer aux documents US-A-4,352,083 et US-A-4,317,027.

Comme visible à la figure 3, (R désignant la résistance et T la température), ce disjoncteur 30 possède un coefficient de température positif permanent avec une résistance augmentant avec la température. Ce disjoncteur 30 passe très rapidement d'une très basse résistance à une résistance élevée lorsque que, par exemple, consécutivement à une surintensité, sa température dépasse un certain seuil ici de l'ordre de 120°.

Ainsi qu'on l'aura compris, en cas de surchauffe externe ou interne du disjoncteur 30, l'augmentation de résistance protège l'allume-cigares ainsi que la paroi de fixation du véhicule, en réduisant le courant traversant le corps 10 à travers la languette 4, le disjoncteur 30, et le corps 2 à un niveau faible. En effet, il y a un gonflement du polymère entraînant une séparation des particules de carbone et donc diminution de la conductivité.

Une fois que le disjoncteur 30 a été activé celui-ci reste à l'état de haute résistance jusqu'à l'élimination du défaut. Lorsque la surintensité ou la température sont substantiellement réduites ou éliminées, le disjoncteur réarmable se refroidit et retrouve sa faible résistance, l'allume-cigares devenant à nouveau opérationnel sans qu'il soit nécessaire de remplacer un quelconque composant et notamment le fusible associé à l'allume-cigares. On appréciera la faible épaisseur du disjoncteur 30, ainsi que sa grande surface favorable à une réduction de sa résistance.

Lorsqu'en position de chauffage le bouton 13 reste bloqué, il se produit une surchauffe du corps de chauffage et un échauffement du disjoncteur 30 entraînant son intervention avec réduction du courant le traversant et un isolement du corps 2.

Il en est de même en cas de court-circuit, l'augmentation du courant traversant le disjoncteur provoquant un échauffement interne de celui-ci.

Dans tous les cas, en extrayant le bouchon 1 on provoque l'élimination du défaut et le disjoncteur redevient opérationnel après refroidissement.

On appréciera que le centreur selon l'invention évite tout court-circuit par contact du disjoncteur avec l'organe de fixation 8, ici une vis en variante un rivet, traversant ledit centreur.

A la figure 4, ce disjoncteur est interposé axialement entre la tête de l'organe de fixation 8 et la base du bilame 3, la languette 4 étant en contact avec le fond 9. Dans ce cas, son étendue (sa surface) est réduite par rapport à celle du disjoncteur de la figure 1 décrit ci-après, ce qui est favorable à la réduction de son coût.

La pièce isolante 7 présente alors un centreur sous forme d'une collerette 71 ou cheminée entourant intérieurement la partie filetée de la vis 8 et extérieurement le bilame 3, qui se trouve ainsi isolé de la partie filetée de la vis ; la hauteur de la collerette 71 étant calculée en conséquence pour que la tête de l'organe 8 vienne au contact du disjoncteur. Le courant passe alors de la languette 5 à la partie filetée de la vis 8, puis à la tête de celle-ci au disjoncteur thermique 30 avant d'atteindre le bilame 3. En cas de surchauffe et/ou de surintensité, la résistance du disjoncteur 30 augmente et le bilame est isolé électriquement.

On appréciera que le disjoncteur est proche du corps de chauffage 10 en sorte qu'il réagit plus rapidement en cas de surchauffe, notamment lorsque le bouton 13 reste coincé.

On appréciera qu'un maximum de pièces de l'allume-cigares est conservé et que l'organe de fixation 8 permet un serrage du disjoncteur thermique 30.

Avantageusement, on modifie les pièces isolantes 6 et 7 pour provoquer un blocage en rotation rendu nécessaire du fait que la languette 4 ne peut plus servir de moyens de blocage des diverses pièces par coopération avec le corps 2.

Ainsi à la figure 4, la pièce 6 peut être pourvue latéralement, de part et d'autre de la vis 8, de deux pattes ou pions (non visibles) traversant des ouvertures du fond 9 pour coopération par liaison de forme avec des échancrures (non visibles) de la pièce 7. L'inverse est possible, la pièce 7 présentant les pattes ou pions et la patte 6 les échancrures. Cette disposition est également applicable dans le mode de réalisation de la figures 5.

Ainsi les pièces d'isolation électriques peuvent être standardisées au maximum, avec possibilité d'implantation du disjoncteur thermique 30 au niveau du bilame ou du corps d'allumage. Bien entendu, il est possible d'implanter un second disjoncteur thermique 30 entre le fond 9 du corps d'allumage 2 et la base de la languette d'alimentation électrique 4 (figure 5). Il est créé ainsi une disposition à deux disjoncteurs thermiques réarmables, l'un implanté au niveau du corps d'allumage, pour la protection contre les courts-circuits, l'autre implanté à proximité du corps de chauffage 10 pour la protection contre les surchauffes.

A la figure 5, la solution conduit à modifier la pièce 6 pour formation de pattes ou pions décrits ci-dessus, traversant des ouvertures du fond 9 normalement traversées par des saillies de la languettes 4.

Les pions ou pattes de la rondelles 6 coopèrent alors avec les échancrures existantes de la pièce 7. Bien entendu le téton de centrage de la pièce 6 doit être augmenté de l'épaisseur du disjoncteur 30 et en variante on peut modifier également la pièce 7 pour prévoir sur celle-ci les pattes ou pions et sur la rondelle 6 les échancrures. Les moyens de blocage en rotation des pièces 4 à 7 font donc appel aux deux pièces d'isolation 6,7.

A la figure 4, la pièce 7 est modifiée pour formation sur celle-ci du centreur 71 d'isolation ainsi que le trou de passage de l'organe de fixation 8.

Dans les figures 1 à 4, selon l'invention le disjoncteur 30 est de forme plate, ici annulaire, et est percé pour passage d'un centreur isolant, tel qu'un téton, une collerette ou une cheminée, appartenant à une pièce d'isolation électrique portée par l'allume-cigares et traversée intérieurement par une pièce 8 appartenant au circuit électrique d'alimentation du corps électrique de chauffage. Il en est de même du second disjoncteur de la figure 5.

Un fonctionnement irréprochable de l'allumecigares sans risque de court-circuit est ainsi obtenu, globalement sans augmentation de sa taille et de son encombrement.

Bien entendu le disjoncteur 30 peut être dissymétrique et peut avoir une configuration annulaire, rectangulaire ou autre suivant les applications et en variante les pions ou pattes de la rondelle 6 peuvent être prolongés pour coopérer non seulement avec les échancrures de la pièce 7, mais également avec des trous pratiqués dans le bilame. Dans ce cas, la présence de la collerette 71 n'est plus indispensable.

De même il est possible d'inverser les structures. La pièce interne électriquement isolante, servant à l'isolation du bilame 3, est dotée d'un téton de centrage centralement creux, traversant l'ouverture 9 du fond en direction de la pièce externe électriquement isolante.

L'alésage interne du téton est de forme tronconique pour passage de l'organe de fixation 8. Ce téton centreur est propre à coopérer avec une cheminée complémentaire que comporte ladite pièce externe, ledit téton pénétrant à l'intérieur de ladite cheminée.

Comme à la figure 5, un second disjoncteur 30 peut être interposé entre la languette 4 et le fond 9 en étant protégé par la pièce externe, qui est de forme creuse.

Le contour du téton et le contour complémentaire de la cheminée peuvent être par exemple de forme quadratique, l'ouverture complémentaire prévue dans le fond 9 pour le passage du téton étant alors également de forme carrée.

Ainsi un blocage en rotation des diverses pièces est aisément obtenu. Bien entendu le téton, la cheminée et l'ouverture du fond peuvent être de forme annulaire, et dans ce cas le blocage en rotation des diverses pièces peuvent se faire à l'aide d'un téton massif de la pièce isolante interne traversant une ouverture et respectivement du fond 9 et de la languette 4.

Dans ce cas, le téton immobilise en rotation la languette 4, qui à son tour immobilise la pièce isolante externe en traversant le fond de celle-ci.

Toutes ces diverses pièces sont ainsi bloquées en rotation avec une bonne assise pour le disjoncteur 30 grâce à la cheminée pressant les pièces 4,30. Bien entendu il est possible de prolonger le téton afin que celui-ci traverse un trou complémentaire pratiqué dans le fond de la pièce isolante externe, le passage dans la languette 4 n'étant alors plus nécessaire.

L'invention ouvre la voie à un grand nombre d'applications, ainsi il est possible de remplacer le bilame classique par un élément élastique d'accrochage 300 métallique, de même forme que le bilame 3.

En effet, du fait de la présence du disjoncteur 30 la pièce 300 peut servir uniquement de pièce de contact au bénéfice du coût de fabrication et des problèmes de réglage, les lames de ladite pièce n'ayant plus à s'incurver.

Ainsi à la figure 6, le bouchon 1 peut alors ne comporter que des pièces statiques ce qui simplifie celui-ci, augmente sa fiabilité et sa robustesse.

Dans cette figure, des moyens de retenue interviennent entre le corps 2 et le bouchon 1 pour maintien de celui-ci en position inactive de repos et en position active de chauffage.

Le bouchon 1 est dépourvu de parties mobiles l'une par rapport à l'autre. Le bouchon 1 comporte une coupelle de guidage 111 propre à coopérer avec l'intérieur du corps d'allumage et une coupelle d'alimentation électrique 110 fixée à isolation sur la coupelle de guidage 111 et entourant le corps de chauffage 10.

Cette coupelle 110, de forme annulaire, fait saillie par rapport à la coupelle 111. La coupelle 111 entoure la coupelle 110 et comporte deux gorges échelonnées axialement 191 et 192.

Le corps d'allumage 2 porte deux languettes d'accrochage symétriques 190 dirigées vers l'extrémité ouverte du corps.

Ainsi en position de repos, la languette 190 coopère avec la gorge 192 tandis qu'en position de chauffage la languette 190 coopère avec la gorge 191.

La coupelle 110 est alors admise dans cette position de chauffage à venir en contact avec les becs 20 des lames de l'élément d'accrochage 300. Les lames 300 s'appuient alors sur un anneau 193 que comporte la coupelle 110 pour établissement du circuit électrique entre les pièces 5,8,300,110,18,111.

Lorsque le corps de chauffage 10 chauffe, un échauffement du disjoncteur 30 se produit qui réduit alors le courant passant dans le circuit du corps de chauffage.

La pièce d'isolation électrique interne 70 comporte une collerette 71 comme à la figure 4 et, suivant une caractéristique, une rondelle élastique supplémentaire 35 est interposée entre le disjoncteur 30 et la tête de la vis 8. La rondelle 35 permet une bonne application du disjoncteur 30, avec une pression contrôlée, au contact de l'élément 300 tout en s'affranchissant des tolérances de fabrication au niveau de la collerette 71. Les phénomènes de fluage et de cassure du disjoncteur sont ainsi diminués.

Pour avertir l'usager que le corps de chauffage a suffisamment chauffé, il est prévu un circuit d'avertissement pour l'usager comportant une lampe 82.

Une lampe 81 est prévue à l'intérieur du bouchon 1 et comporte un circuit d'alimentation électrique 84. Le circuit électrique 83 associé à la lampe 82 est relié à une languette d'alimentation 61 branchée sur les lanternes du véhicule.

En position inactive, le bouchon 1 à extrémité translucide (figure 7) laissant apparaître le sigle de l'allume-cigares, est illuminé par la lampe 81.

En position active de chauffage, la seconde lampe 82 est alimentée au début en pleine tension, puis après s'éteint en fin de chauffage donnant ainsi une indication par variation d'éclairage du bouchon.

La lampe 82 est montée latéralement, la paroi 86 du véhicule servant à la fixation de l'allume-cigares étant conformée à cet effet. Pour plus de précision on se reportera au schéma de la figure 8 sachant que le bouchon est ôté le circuit électrique est coupé. Ainsi le disjoncteur 30 a une fonction supplémentaire.

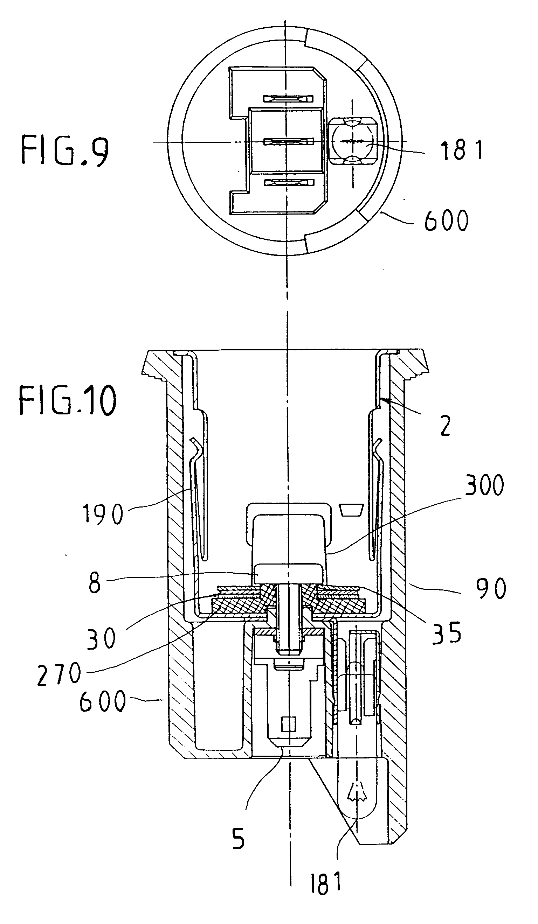

En variante (figures 9 et 10) la lampe d'éclairage 181 peut être portée par la pièce d'isolation électrique externe 600 en matériau translucide conducteur de lumière et formant connecteur pour les languettes 4,5 ; 61.

Dans ce cas le corps d'allumage est assemblé par les vis 8 avec la pièce 600, le montage se faisant par enfilage axial de la pièce 600 avec le corps d'allumage dans un trou de la paroi du véhicule.

On notera que la seconde pièce d'isolation électrique 270 est modifiée et comporte une creusure comme à la figure 1, un téton de la pièce 600 traversant le fond du corps 2 pour coopérer avec ladite creusure.

Dans cette figure, le disjoncteur 30 est également implanté au niveau d'un élément d'accrochage 300 avec interposition d'une rondelle élastique 35 entre la tête et ledit disjoncteur.

On appréciera que dans tous les cas, le disjoncteur thermique 30 minimise les phénomènes de battement du bilame 3 lorsque le bouchon 1 reste coincé. En effet, l'augmentation de la résistance limite ces phénomènes dus à un écartement des lames du bilame et un resserrement de celui-ci.

Grâce au mode de réalisation des figures 6 à 10, ces phénomènes de battement sont globalement éliminés.

On appréciera que l'implantation du disjoncteur au voisinage de l'élément d'accrochage améliore les temps de réponse. Les fusibles et les accessoires concernés du véhicule sont ainsi mieux protégés.

Bien entendu, les parties d'alimentation électriques 4,5 peuvent avoir une autre forme, par exemple avoir une partie axiale creuse pour coopérer avec des parties mâles complémentaires.

## Revendications

1. Allume-cigares, notamment pour véhicules automobiles, du genre comportant, d'une part, un bouchon amovible (1), formant une fiche de courant, pourvu d'une coupelle d'extrémité (11) recevant un corps électrique de chauffage (10), et d'autre part, un corps creux d'allumage (2), formant prise de courant, pourvu intérieurement d'un élément d'accrochage (3) et extérieurement de parties d'alimentation électriques (4,5), ledit bouchon (1) se logeant à coulissement à l'intérieur du corps d'allumage (2) avec coopération de ladite coupelle (11) avec ledit élément d'accrochage (3) pour maintien du corps électrique de chauffage (10) en position de chauffage et établissement d'un circuit électrique d'alimentation pour ledit corps de chauffage (10), dans lequel un dispositif de protection contre les surchauffes est inséré dans ledit circuit électrique d'alimentation, ledit dispositif de protection consistant en un disjoncteur thermique réarmable (30) à coefficient de température positif permanent, avec une résistance augmentant avec la température, et dans lequel l'élément d'accrochage (3) est fixé au fond (9) que comporte le corps d'allumage (2) par l'intermédiaire d'un organe de fixation (8) dont la tête s'appuie sur l'élément d'accrochage (3) et qui traverse une pièce électriquement isolante (7) interposée entre ledit fond (9) et ledit élément d'accrochage (3), caractérisé en ce que ledit disjoncteur thermique réarmable (30)est implanté entre la tête de l'organe de fixation (8) et l'élément d'accrochage (3) et en ce qu'il est percé pour le passage d'un centreur isolant appartenant à la pièce d'isolation électrique (6,7,72) portée intérieurement par le corps d'allumage (2), ledit centreur isolant étant traversé intérieurement par l'organe de fixation (8) appartenant au circuit électrique d'alimentation dudit corps de chauffage (10).

2. Allume-cigares selon la revendication 1, caractérisé en ce que la pièce isolante (7) présente une collerette (71) traversée intérieurement par l'organe de fixation (8) et entourée extérieurement par l'élément d'accrochage (3), pour isolation de celui-ci par rapport à l'organe de fixation (8).

3. Allume-cigares selon la revendication 2, caractérisé en ce que la hauteur de la collerette (71) est telle que la tête de l'organe de fixation vienne au contact dudit disjoncteur (30).

4. Allume-cigares selon la revendication 1 ou 2, caractérisé en ce qu'une rondelle élastique (35) est interposée entre la tête de l'organe de fixation (8) et l'élément d'accrochage (3).

5. Allume-cigares selon l'une quelconque des revendications 1 à 4, caractérisé en ce que l'élément d'accrochage (300) consiste en un simple élément métallique.

6. Allume-cigares selon l'une quelconque des revendications 1 à 5, dans lequel le corps d'allumage présente un fond (9) et une partie d'alimentation électrique (4), sous forme de languette, avec une base adjacente audit fond, caractérisé en ce qu'un second disjoncteur thermique réarmable est inséré entre ledit fond et ladite base de ladite languette (4).

## Claims

1. A cigar lighter, in particular for motor vehicles, of the kind comprising, firstly, a removable plug (1) constituting a current receiving element and having an end cup element (11) which receives an electrical heating body (10), and secondly a hollow lighter body (2) constituting a current supply element, which is provided internally with a clip element (3) and externally with electrical supply members (4, 5), the said plug (1) being slidingly fitted within the lighter body (2) with cooperation of the said cup element (11) with the said clip element (3), so as to maintain the electrical heating body (10) in a heating position and to establish an electric supply circuit for the said heating body (10), wherein a device for giving protection against overheating is inserted in the said electrical supply circuit, the said protective device consisting of a rearmable thermal cut-out (30) having a permanent positive temperature coefficient and a resistance which increases with the temperature, and wherein the clip element (3) is fixed to the base (9) which is part of the lighter body (2) by means of an interposed fastening member (8), the head of which bears on the clip element (3), and which extends through an electrically insulating member (7) interposed between the said base (9) and the said clip member (3), characterised in that the said rearmable thermal cut-out (30) is fitted between the head of the fastening member (8) and the clip member (3), and in that it is pierced so as to accommodate therein an insulating centring element which is part of the electrical insulating member (6, 7, 72) carried internally by the lighter body (2), with the insulating centring element being traversed internally by the fastening member (8), which is part of the electrical supply circuit for the said heating body (10).

2. A cigar lighter according to Claim 1, characterised in that the insulating member (7) has a collar portion (71) which is traversed internally by the fastening member (8), and which is surrounded externally by the clip member (3) so as to insulate the latter with respect to the fastening member (8).

3. A cigar tighter according to Claim 2, characterised in that the height of the collar portion (71) is such that the head of the fastening member makes contact with the said cut-out (30).

4. A cigar lighter according to Claim 1 or Claim 2, characterised in that a resilient ring (35) is interposed between the head of the fastening member (8) and the clip member (3).

5. A cigar lighter according to any one Claims 1 to 4, characterised in that the clip member (300) consists of a simple metallic element.

6. A cigar lighter according to any one of Claims 1 to 5, in which the lighter body (2) has a base (9) and an electrical supply member (4) in the form of a tongue, with a seat portion adjacent to the said base, characterised in that a second rearmable thermal cut-out is inserted between the said base and the said seat portion of the said tongue (4).

## Patentansprüche

1. Zigarettenanzünder, insbesondere für Kraftfahrzeuge, der einerseits einen herausziehbaren Einsatz (1) umfaßt, der einen Stecker bildet und der mit einem Abschlußteller (11) versehen ist, in den ein elektrisches Heizelement (10) eingesetzt wird, und andererseits einen hohlen Anzündkörper (2), der eine Steckdose bildet und der innen mit einem Halteelement (3) und außen mit Stromzuleitungsteilen (4, 5) versehen ist, wobei der besagte Einsatz (1) gleitend in das Innere des Anzündkörpers (2) eingesetzt wird, was unter Zusammenwirken des besagten Tellers (11) mit dem besagten Haltealement (3) erfolgt, um das elektrische Heizelement (10) in Heizposition zu halten und einen Speisestromkreis für das besagte Heizelement (10) herzustellen, bei dem eine Schutzvorrichtung gegen Überhitzungen in den besagten Speisestromkreis eingefügt ist, wobei die besagte Schutzvorrichtung aus einem rückstellbaren thermischen Schutzschalter (30) mit ständigem positivem Temperaturkoeffizienten besteht, dessen Widerstand sich bei steigender Temperatur erhöht, und bei dem das Halteelement (3) an dem zum Anzündkörper (2) gehörenden Boden (9) anhand eines Befestigungsorgans (8) befestigt ist, dessen Kopf am Halteelement (3) aufliegt und das durch ein elektrisch nichtleitendes Teil (7) hindurchgeht, das zwischen dem besagten Boden (9) und dem besagten Halteelement (3) eingefügt ist, **dadurch gekennzeichnet,** daß der besagte rückstellbare thermische Schutzschalter (30) zwischen dem Kopf das Befestigungsorgans (8) und dem Halteelement (3) angeordnet ist und daß er mit einem Loch für den Durchgang eines nichtleitenden Zentriermittels versehen ist, das zu dem innen am Anzündkörper (2) angebrachten nichtleitenden Teil (6, 7, 72) gehört, wobei durch das besagte Zentriermittel innen das Befestigungsorgan (8) hindurchgeht, das zum Speisestromkries des besagten Heizelements (10) gehört.

2. Zigarettenanzünder nach Anspruch 1 , **dadurch gekennzeichnet,** daß das nichtleitende Teil (7) einen Kragen (71) aufweist, durch den innen das Befestigungsorgan (8) hindurchgeht und der außen durch das Halteelement (3) umschlossen wird, um dessen Isolation im Verhältnis zum Befestigungsorgan (8) zu bewirken.

3. Zigarettenanzünder nach Anspruch 2 , **dadurch gekennzeichnet,** daß die Höhe des Kragens (71) so bemessen ist, daß der Kopf des Befestigungsorgans (8) mit den besagten Schutzschalter (30) in Kontakt kommt.

4. Zigarettenanzünder nach Anspruch 1 oder 2 , **dadurch gekennzeichnet,** daß eine Federscheibe (35) zwischen dem Kopf des Befestigungsorgans (8) und dem Halteelement (3) eingefügt ist.

5. Zigarettenanzünder nach einem der Ansprüche 1 bis 4, **dadurch gekennzeichnet,** daß das Halteelement (300) aus einem einfachen Metallelement besteht.

6. Zigarettenanzünder nach einem der Ansprüche 1 bis 5, bei dem der Anzündkörper einen Boden (9) und einen Stromzuleitungsteil (4) in Form einer Zunge mit einer dem besagten Boden zugekehrten Grundfläche aufweist, **dadurch gekennzeichnet,** daß ein zweiter rückstellbarer thermischer Schutzschalter zwischen dem besagten Boden und der besagten Grundfläche der besagten Zunge (4) eingefügt ist.
